# EUROPEAN PATENT SPECIFICATION

(11) **EP 1 166 509 B1**
(45) Date of publication and mention of the grant of the patent: **01.06.2005**
(21) Application number: 00909509.2
(22) Date of filing: 14.03.2000
(51) Int. Cl.: H04L 12/58, H04Q 11/04

(54) **METHOD AND APPARATUS FOR TRANSFERRING DATA TO A TERMINAL**
VERFAHREN UND VORRICHTUNG ZUR DATENÜBERTRAGUNG ZU EINEM ENDGERÄT
PROCEDE ET APPAREIL DE TRANSFERT DE DONNEES VERS UN TERMINAL

(30) Priority: 31.03.1999 GB 9907439; 02.07.1999 EP 99305269
(43) Date of publication of application: 02.01.2002
(73) Proprietor: BRITISH TELECOMMUNICATIONS public limited company, London EC1A 7AJ (GB)
(72) Inventor: MALLETT, Colin Thomas, Saxmundham, Suffolk IP17 1PP (GB); BENNETT, Wade, Colchester, Essex CO6 2NG (GB)
(74) Representative: Roberts, Simon Christopher
(86) International application number: PCT/GB2000/000923
(87) International publication number: WO 2000/059164

(56) References cited:
- EP-A- 0 798 899
- EP-A- 0 905 944
- WO-A-97/01919
- WO-A-99/03239
- DE-U- 29 900 163
- US-A- 5 870 549
- PATENT ABSTRACTS OF JAPAN vol. 1999, no. 10, 31 August 1999 (1999-08-31) & JP 11 146011 A (NEC CORP), 28 May 1999 (1999-05-28)
- MILLER J G ET AL: "ACCESSING MESSAGES YOUR WAY" AT & T TECHNOLOGY, vol. 10, no. 1, 21 March 1995 (1995-03-21), page 6-9 XP000530274 SHORT HILLS; NEW JERSEY ISSN: 0889-8979

## Description

The present invention relates to the transfer of data between points in a network and in particular to the transfer of data over a digital communications link comprising a signalling channel and a data channel. One example of such a link is provided by Integrated Services Digital Network (ISDN) equipment.

ISDN enables devices to communicate with each other using digital signals over a standard telephone network. ISDN network terminating units (NTUs) provide a communications link made up of a signalling channel and one or more data channels. The signalling channel is used to establish and control connections via one or more of the data channels. The data channels are used to transfer data.

Computers and other processors are connected to a network of other computers by either a permanent link or a temporary link. Permanent links are commonly provided by canting that connects a network card installed in the computer to the rest of a local area network (LAN). The computer is thereby permanently connected to the network and can usually send and receive data over the network at any time. Temporary links are commonly provided via a telephone network, the computer being provided with a modem so as to be able to send and receive data over a telephone line. in order to send or receive data, the computer has to dial up another computer that provides a suitable service and establish a connection before any data can be transferred between the computers. One example of a temporary connection is that made by a home or office computer to an internet service provider (ISP).

While a permanent connection via a LAN provides immediate access to other computers via the network, it requires a significant investment in cabling which is expensive and in many cases unfeasible. The alternative temporary dial up connection is a cheaper solution but data can only be sent and received during a connection. Connections via the telephone network usually incur call charges, thus normally prohibiting the use of a dial up connection as a permanent network link.

Japanese Patent Application Publication No. 10126407 describes a process which enables a user to verify the arrival of an email and to see partial information on the email, such as for example, a title etc., prior to downloading the email from its source. In JP-A-10126407 information on the email's content is sent this as user-user information in the form of a setup message over the D-channel transparently through the network between the ISDN adaptors of the sending and receiving parties. However, JP-A-10126407 does not show the use of the D-channel to send an email by sending a plurality of signalling messages each signalling message conveying a part of the email message such that when each part of the email message has been received it can be reconstituted.

According to one aspect of the invention there is provided a network terminating unit for receiving digital data via a communications link comprising a signalling channel and at least one data channels, said signalling channel being operable to establish and control connections between said network terminating unit and one or more data sources via said communications link so that data can be transferred from the or each data source to the network terminating unit via at least one data channel, the network terminating unit being characterised by comprising: a processor arranged to detect messages transmitted on the signalling channel that contain at least partial data of a predetermined type, the detected messages comprising sufficient information to enable the network terminating unit to establish how parts of data of the same predetermined type sent in separate messages are linked to enable the network terminating unit to reconstitute the data; means arranged to extract the at least partial data; and means arranged to store the at least partial data for passing to a first destination device, the network terminating unit being arranged to establish how partial data detected in separate signalling messages are linked and being further arranged to reconstitute the data from said plurality of signalling messages.

This arrangement has the advantages that it can give the user an early indication of e-mails having arrived at the server computer of the Internet Service Provider (ISP). In other words, the user does not have to dial up the ISP to check for new data/e-mail. In addition, data such as e-mail can be downloaded to the NTU during periods of low use or overnight. A further advantage is that the number of calls made to the ISP may be reduced.
Figure 1 is a schematic representation of a computer network embodying the present invention;
Figures 2a and 2b show the format of messages sent between devices in the network of Figure 1;
Figure 3 is a flow diagram illustrating processing carried out by one of the computers in the network of figure 1;
Figure 4 is a schematic representation of a network terminating unit in the network of figure 1; and
Figure 5 is a flow diagram illustrating processing carried out by the network terminating unit of Figure 4.

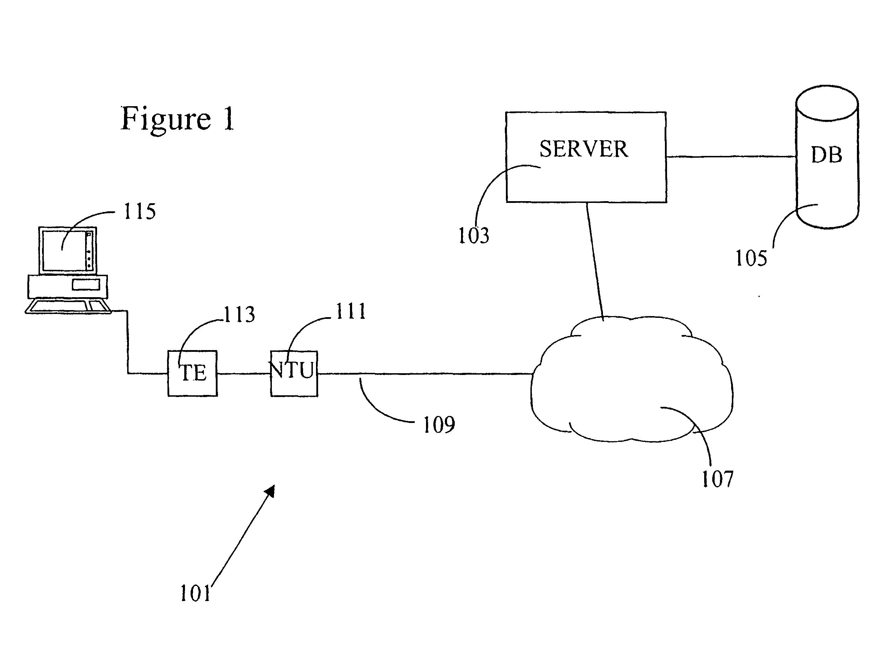

Figure 1 shows a computer network 101 (simplified for the purposes of this description) comprising a server computer 103 connected to a database 105 and a network 107. The server 103 is running conventional software for providing an e-mail service. The database 105 is used for storing data associated with providing an e-mail service. The network 107 comprises a combination of computer networks and telephone networks to provide connections between the server computer 103 and other computers. A connection 109 is shown between the network 107 and a network terminating unit (NTU) 111 which in turn is connected to a modem 113 and a client computer 115. The client computer 115 is a conventional desktop computer such as a PC running e-mail client software for sending and receiving e-mail.

The connection 109 allows the client computer 115 and the server computer 103 to communicate with each other so that a user of the client computer 115 can send and receive e-mail or other data via the server computer 103. The connection 109 is an ISDN (Integrated Services Digital Network) connection that provides digital communications between the two computers 103, 115. Accordingly, the NTU 111 is an ISDN NTU and the modem 113 is a conventional ISDN modem. Similarly, the server computer 103 also comprises the functionality of an ISDN modem and an ISDN NTU (not shown).

As noted above, the ISDN connections provide a digital (as opposed to analogue) connection between two pieces of equipment. Typically, the link comprises two high bandwidth channels called B-channels for carrying user's data and a lower bandwidth channel called a D-channel for carrying out signalling and connection control. In other words, the D-channel is used to set up and monitor a connection between two pieces of equipment and carries out the necessary communications with the telephone network to do so. The connection itself is provided via one (or more) of the B-channels under the control of the D-channel. The B-channel is the normal conduit for the data transmission.

The way in which ISDN connections function is defined in Recommendations published by the Telecommunication Standardisation Sector of the International Telecommunication Union (ITU-T). One such recommendation is entitled "Digital Subscriber Signalling System No. 1 (DSS 1) - ISDN User-Network Interface Layer 3 Specification for Basic Call Control" (ITU-T Recommendation Q.931?. This recommendation specifies the procedures for the establishing, maintaining and clearing of network connections at the ISDN user-network interface. The procedures are defined in terms of messages exchanged over the D-channel of the ISDN link. The layer (Layer 3) referred to in the title of the recommendation is a layer in the protocol structure used for carrying out digital communications. Layer 3 of the ISDN protocol structure includes the signalling that ensures that messages are routed to the appropriate destinations, messages are acknowledged and communications are controlled. In other words, layer 3 is the protocol level of D-channel signalling.

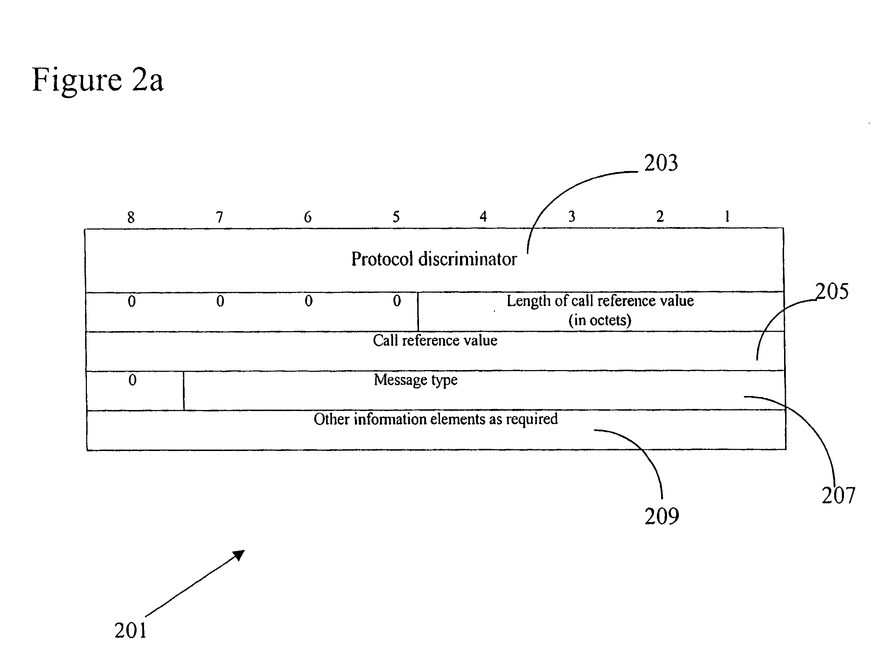

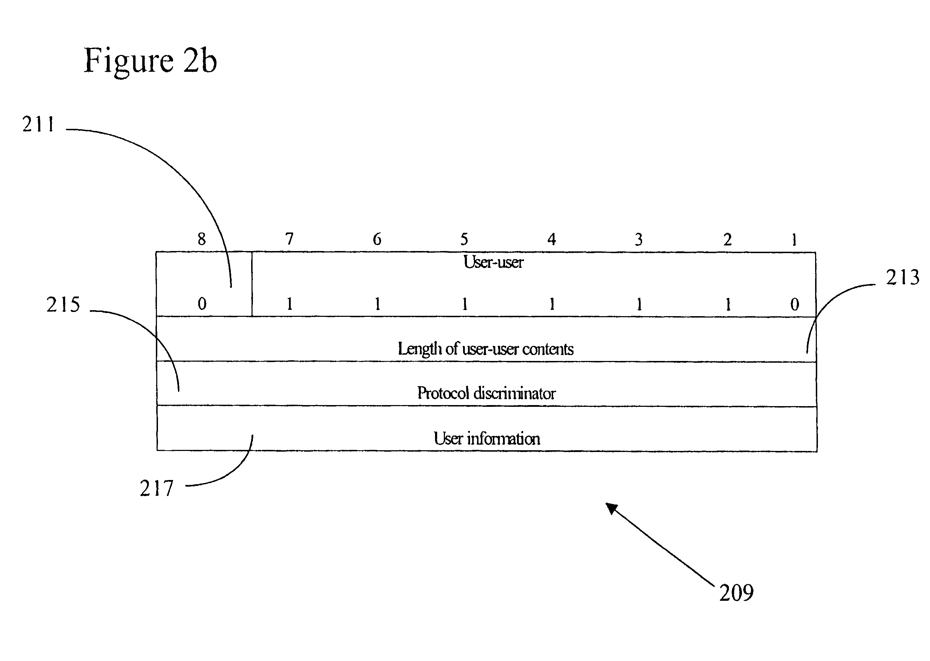

Figure 2a illustrates the format for every message 201 transmitted on the D-channel in accordance with the ITU-T Recommendation. Each message 201 comprises a protocol discriminating part 203, a call reference 205, a message type indicator 207 and an information element 209. The protocol discriminating part is used by the network 107 to discriminate between messages for user-network call control and other types of message and is always the first part of any message. The call reference 205 is a unique identifier that distinguishes all messages for a particular connection or call from other messages. The message type indicator 207 identifies the function of the message being sent. The information element 209 carries additional information particular to pieces of equipment in the network 107 and will be described further with reference to Figure 2b.

One form of additional information that may be carried by the information element 209 is termed "user-user" information. Such information is not interpreted by the network 107 during its transmission but is delivered transparently to an ISDN destination. Figure 2b illustrates the structure of a user-user information element. The first part of the element is the identifier 211 that identifies the element 209 as user-user as opposed to any other of the possible elements defined by the ITU-T Recommendation. The second part 213 indicates the length of the element 209 which has a network dependant limit of 35 or 131 octets for messages sent in association with a circuit-mode connection and a limit of 260 octets for those messages sent in a temporary or permanent user-user signalling connection. The third part 215 of the element 209 is used to discriminate the protocol of the element 209 from that of other elements. The fourth part 217 is the section of the message that can be used for carrying the user's information. The form of the contents of this message section 217 are unrestricted.

The third part 215 of the element 209 is used to identify the protocol being used for the message. In accordance with the ITU Recommendations, this can be a user specific protocol that enables the fourth part 217 of the element 209 to be structured in accordance with the user's needs i.e. in accordance with a user-defined protocol. In the present embodiment, the user-user message facility is used to pass e-mail messages between the computers 103, 115 as will be described in further detail below.

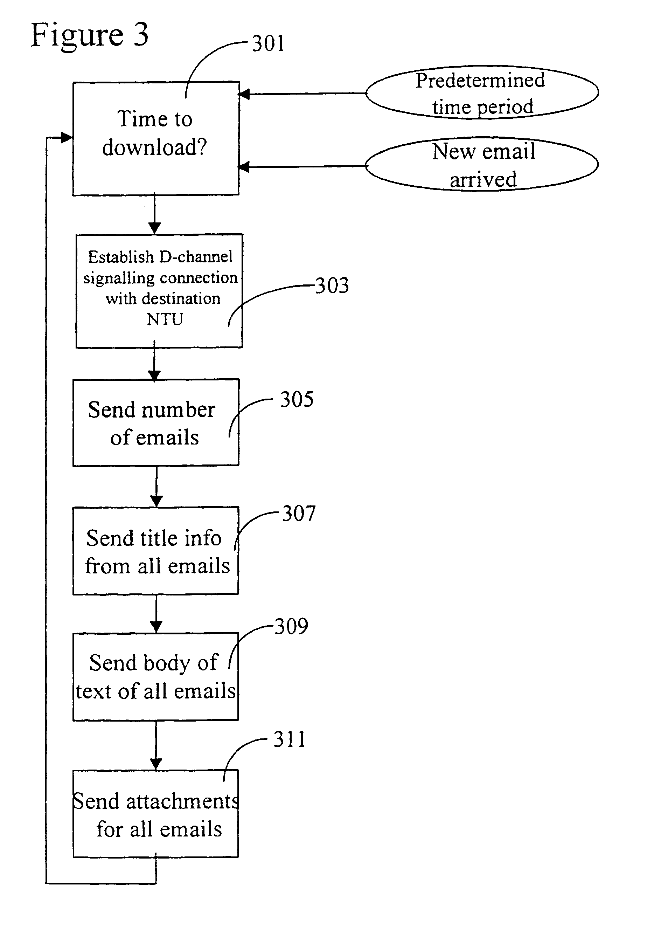

The server computer 103 is capable of creating a conventional ISDN connection via the network 107, NTU 111 and the modem 113 to the client computer 115. With reference to Figure 3, the e-mail software running on the server computer 103 is arranged to respond at step 301 to either of two stimuli. These stimuli are either the receipt of one or more e-mail messages destined for the user of the client computer 115 or to a predetermined time having elapsed. When one of the two stimuli is received, then at step 303, the server 103 opens a D-channel user-user signalling connection to the NTU 111. At step 305, information representing the number of messages is passed to the NTU in a signalling message. Then at step 307, identifications of the senders or the titles of each message (or both) are sent to the NTU in one or more signalling messages. At step 309, the text of each message is sent to the NTU in one or more signalling messages. Then at step 311, any attachments to the e-mail messages already sent are then sent to the NTU. Once all the messages have been sent, the server process returns to step 301 to await a further stimulus.

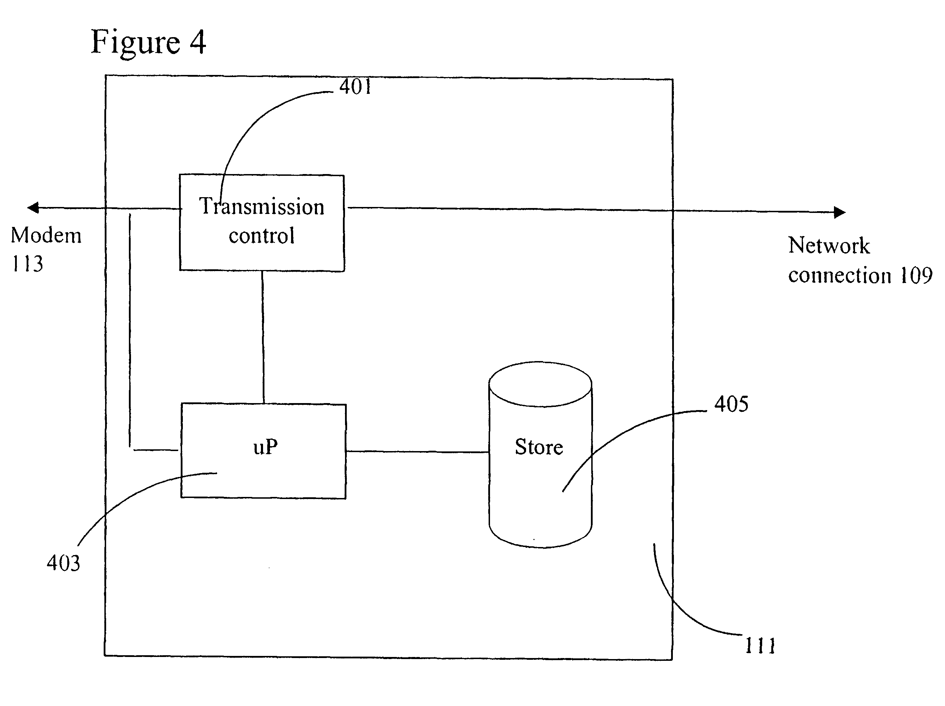

With reference to Figure 4, the NTU 111 comprises a transmission control unit 401 connected between the network connection 109 and the modem 113. The transmission control unit 401 operates under the control of a micro-processor 403 which is also connected to a local storage device 405. The micro-processor 403 in combination with the transmission control unit 401 are arranged to carry out the functions of a conventional ISDN NTU. In addition to these conventional functions, the processor is also arranged to detect incoming user-user signalling messages on the D-channel that use a user defined protocol that indicates the fact that a message contains information relating to e-mail messages. Also, the micro-processor is arranged to detect whether or not the computer 115 and modem 113 are connected to it and active.

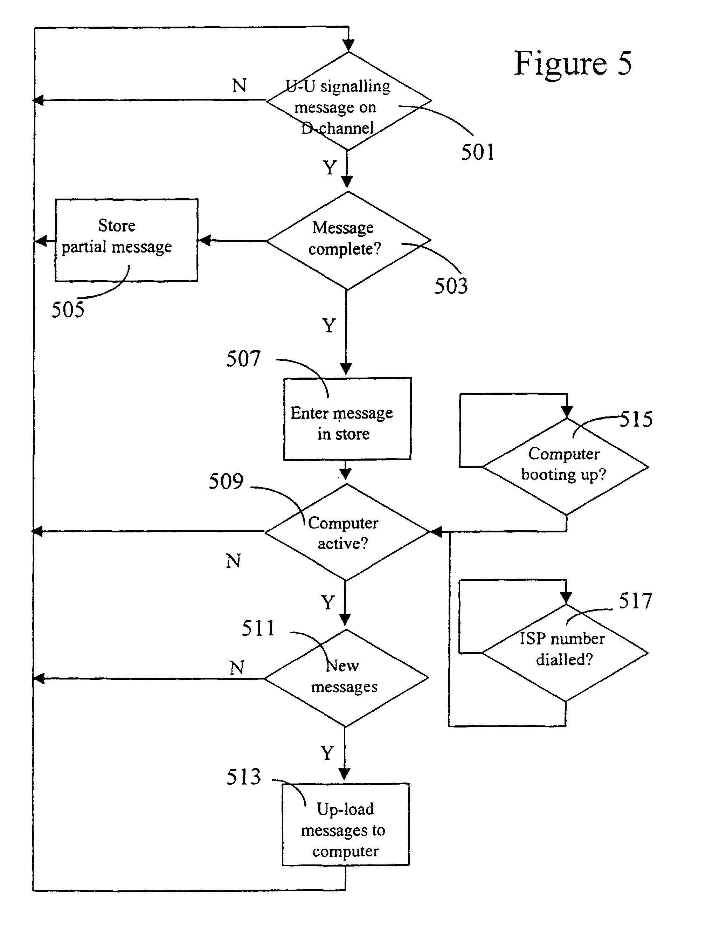

With reference to Figure 5, at step 501, the processor 403 scans incoming user-user signalling messages for those containing e-mail data and when such a message is received, moves to step 503. As will be understood from the description of the transmission of the e-mail data by the server 103 (with reference to figure 3), each user-user message may only contain parts of e-mails or their attachments. Accordingly, if partial information is received, this is placed in the store 405 at step 505 and the process returns to step 501. If at step 503 part of an e-mail or attachment is received that completes data already placed in the store 405 then the process moves to step 507. Similarly, if a complete e-mail text, list of titles or attachment is received, the process moves to step 507. At step 507, the completed e-mail information is placed in the store 405 and the process moves to step 509 and establishes whether the computer 115 is active (i.e. booted up and running). If the computer 115 is not active then the process returns to step 501. If the computer 115 is active then at step 511 the processor identifies the new and complete messages or parts thereof in the store 405 and, if present, moves to step 513. If at step 511 no new and complete messages (or parts thereof) are present the process returns to step 501. At step 513, the processor is arranged to transfer the complete messages (or parts thereof) to the computer 115 for display to the user via the client e-mail software. Once the transfer is complete, the process returns to step 501.

The processor 403 is also arranged to respond to two further events. Firstly, if the processor 403 detects at step 515 that the computer 115 has just booted up then the process moves to step 509 as described above. Secondly, if the processor detects at step 517 that the modem 113 is being used to dial a number that corresponds to the server computer 103, the processor postpones the call and moves to step 509. This ensures that the e-mail already stored in the NTU 111 can be presented to the user before the process of dialling up the server 103 is proceeded with.

The server computer 103 and the client computer 115 are arranged to send user-user messages that contain sufficient information to enable the NTU 111 to establish how parts of e-mails sent in separate messages are linked to enable the NTU 111 to reconstitute the e-mail messages. Suitable protocols for enabling the NTU 111 to carry out this function are readily available to those skilled in the art.

As described above, the timing of the downloading of the e-mail data can be triggered by new e-mail arriving at the server 103 or by a predetermined time having elapsed. In addition or alternatively, the downloading could be triggered when activity on the D-channel is at a minimum such as during the night. In addition to e-mail being downloaded it would also be possible to download other data (including instruction data) such as previously ordered software, the results of searches, news information or telemetry data. As well as being used to download data from the server to the client computer, the arrangement described above can also be useful for sending data from the client computer to the server computer such as e-mails for sending. With such an arrangement it would then be possible to send and receive non-urgent data without needing to make a specific call to the appropriate e-mail/internet service provider. This would reduce the use of valuable B-channel bandwidth and increase the convenience to the user.

In the embodiment described above, the server computer is arranged to download all of each e-mail message. As an alternative, the server could be arranged to download only partial information such as the number of e-mails, their titles or the sender details. Such details could then be displayed or indicated to the user by the NTU itself without the need for the client computer. This would enable users to judge whether a call to the internet service provider (ISP) to download all the e-mails was justified. This feature would also enable a user to detect when a particular e-mail has arrived without having to make repeated calls to the ISP.

The client or server software can be arranged to be configurable by the user so that the amount or type of data that is downloaded can be defined by the user. In addition, the timing of any download can be governed by user configuration. As a further alternative, the server or client software can be arranged to detect when a particular download will exceed a predetermined time limit and instead to open a B-channel to complete the download. Similarly, if the D-channel is busy or congested or if the download is large and/or urgent a B-channel can be opened and used for the download.

As will be understood by those skilled in the art, the processing required to provide the functions described above need not be provided by the server computer of the ISP but, instead, could be provided by an alternative processor in the network between the ISP and the client computers. Such a processor may be in a telephone network router or other network element.

As will be understood by those skilled in the art, the invention described above may be embodied in one or more computer programs. These programmes can be contained on various transmission and/or storage mediums such as a floppy disc, CD-ROM, or magnetic tape so that the programmes can be loaded onto one or more general purpose computers or could be downloaded over a computer network using a suitable transmission medium.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A network terminating unit (111) for receiving digital data via a communications link (109) comprising a signalling channel and *at least one* data channels, said signalling channel being operable to establish and control connections between said network terminating unit (111) and one or more data sources (103) via said communications link (109) so that data can be transferred from the or each data source (103) to the network terminating unit (111) via *at least one* data channel, the network terminating unit (111) being **characterised by** comprising:
a processor (403) arranged to detect messages transmitted on the signalling channel that contain at least partial data of a predetermined type, the detected messages comprising sufficient information to enable the network terminating unit (111) to establish how parts of data of the same predetermined type sent in separate messages are linked to enable the network terminating unit (111) to reconstitute the data;
means arranged to extract the at least partial data; and
means arranged to store the at least partial data for passing to a first destination device (115),
the network terminating unit (111) being arranged to establish how partial data detected in separate signalling messages are linked and being further arranged to reconstitute the data from said plurality of signalling messages.

2. A network terminating unit (111) as claimed in claim 1, wherein said at least partial data is reconstituted prior to being passed to a first destination device.

3. An network terminating unit (111) according to claim 1 or claim 2, further comprising means operable to send at least partial data received for the destination device (115) to further destination devices using messages transmitted on the signalling channel.

4. An network terminating unit (111) according to any preceding claim in which the communications link is provided via Integrated Services Digital Network equipment.

5. An network terminating unit (111) according to any preceding claim in which said at least partial data is a part or a whole at least one e-mail message or other textual message.

6. An network terminating unit (111) according to any preceding claim in which said predetermined type of said at least partial data comprises a software download data type, database search results, news information or telemetry data type.

7. An network terminating unit (111) according to any preceding claim. further comprising means operable to detect whether the destination device (115) is active so as to be able to receive the data and, if said device (115) is active, to transmit the data stored by the network terminating unit (111) to the device (115).

8. An network terminating unit (111) according to any preceding claim further comprising means operable to receive data from the destination device (115) and to package the data in one or more signalling messages for transmitting the data to a further destination device.

9. An network terminating unit (111) according to any preceding claim further comprising means operable to detect signalling messages indicating the set up of a connection to a predetermined destination device (115) and in response to such detection to transmit the data stored by the network terminating unit (111) to the predetermined destination device (115).

10. An network terminating unit (111) according to any preceding claim further comprising:
means operable to monitor the activity of the signalling channel and to send and/or receive the data of a predetermined type when the signalling channel activity is within a predetermined range.

11. An network terminating unit (111) according to any preceding claim further comprising:
means operable to send and/or receive the data of a predetermined type during a predetermined time interval.

12. An network terminating unit (111) according to any preceding claim further comprising means:
operable to estimate the time for transmitting data to a destination via the signalling channel and, if the time exceeds a predetermined threshold, to transmit the data to the destination using one or more of the data channels.

13. An network terminating unit (111) according to any of claims 4 to 11 further comprising:
means operable to:
a) firstly establishing the number of messages to be transmitted to a destination device (115) and transmitting data representing said number,
b) secondly identifying the sender of each message to be transmitted to the destination device (115) and transmitting data representing each said sender;
c) thirdly transmitting data representing the text of each message to the destination device (115).

14. A method of operating a network terminating unit (111) for receiving digital data via a communications link (109) comprising a signalling channel and *at least one* data channels, said signalling channel being operable to establish and control connections between said network terminating unit (111) and one or more data sources (103) via said communications link (109) so that data can be transferred from the or each data source (103) to the network terminating unit (111) via *at least one* data channel, the method of operating the network terminating unit (111) being **characterised by** comprising:
detecting messages transmitted on the signalling channel that contain at least partial data of a predetermined type, the detected messages further containing sufficient information to enable the network terminating unit (111) to establish how parts of data of the same predetermined type sent in separate messages are linked to enable the network terminating unit (111) to reconstitute the data, and
extracting the at least partial data;
establishing how partial data detected in separate signalling messages are linked;
reconstituting the data from said plurality of signaling messages;
storing the at least partial data for passing to a destination device (115),

15. A method as claimed in claim 14, wherein said step of reconstituting the data occurs prior to passing the data to a destination device (115).

16. A method as claimed in either claim 14 or 15, wherein the communications link comprises an Integrated Services Digital Network communications link, and said signalling channel is a D channel of an Integrated Service Digital Network communications link.

17. A method as claimed in any one of claims 14 to 16, wherein the at feast partial data of a predetermined type comprises a part or a whole of at least one e-mail message or other textual message, and wherein in said step of reconstituting said digital data into a whole form, the whole of said at least one or more e-mail message is reconstituted.

18. A method as claimed in any one of claims 14 to 16, wherein the data of a predetermined type comprises a part or a whole of a software download, database search results, news information or telemetry data, and wherein in said step of reconstituting said digital data into a whole form, the whole of said software download, database search results, news information or telemetry data are reconstituted.

19. A method as claimed in any one of claims 14 to 18, further comprising the step of detecting whether the destination device (115) is active so as to be able to receive the reconstituted data and, if said device is active, to transmit the data stored by the network terminating unit (111) to the device (115).

20. A method as claimed in any one of claims 14 to 19, further comprising the step of receiving data from the destination device (115) and packaging the data into one or more signalling messages for transmitting to a further destination device.

21. A method as claimed in any one of claims 14 to 20, further comprising the step of detecting signalling messages indicating the set up of a connection to a predetermined destination device; and, in response to such detection
transferring the data stored by the network terminating unit (111) to the predetermined destination device.

22. A method as claimed in any one of claims 14 to 21, further comprising the step of:
monitoring the activity of the signalling channel; and
transferring the data of a predetermined type when the signaling channel activity is within a predetermined range.

23. A method as claimed in any one of claims 14 to 22, further comprising the step of transferring the data of a predetermined type during a predetermined time interval.

24. A method as claimed in any one of claims 14 to 23, further comprising the step of:
estimating the time for transmitting data to a destination via the signalling channel; and, if the time exceeds a predetermined threshold,
transferring the data to the destination using one or more of the data channels.

25. A method as claimed in any one of claims 16 to 24, further comprising the steps of:
a) firstly establishing the number of messages to be transmitted to a destination device and transferring data representing said number to the network terminating unit (111);
b) secondly identifying the sender of each message to be transmitted to the destination device and transferring data representing each said sender to the network terminating unit (111); and
c) thirdly transferring data representing the text of each message to the network terminating unit (111).

## Patentansprüche

1. Netzwerkabschlusseinheit (111) zum Empfangen von digitalen Daten über eine Kommunikationsverbindung (109), die einen Signalisierungskanal und zumindest einen Datenkanal aufweist, wobei der Signalisierungskanal betriebsfähig ist, Verbindungen zwischen der Netzwerkabschlusseinheit (111) und einer oder mehreren Aatenquelle(n) (103) über die Kommunikationsverbindung (109) aufzubauen und zu steuern, so dass Daten von der oder den Datenquelle(n) (103) an die Netzwerkabschlusseinheit (111) über zumindest einen Datenkanal übertragen werden können, wobei die Netzwerkabschlusseinheit (111) **dadurch gekennzeichnet ist, dass** sie aufweist:
einen Prozessor (403), der ausgebildet ist, Meldungen zu erfassen, die auf dem Signalisierungskanal übertragen werden, die zumindest teilweise Daten eines vorgegebenen Typs aufweisen, wobei die erfassten Meldungen ausreichend Information aufweisen, um der Netzwerkabschlusseinheit (111) zu ermöglichen, festzustellen, wie Teile von Daten desselben vorgegebenen Typs, die in getrennten Meldungen gesendet werden, verbunden sind, um der Netzwerkabschlusseinheit (111) eine Wiederherstellung der Daten zu ermöglichen;
Mittel, die ausgebildet sind, die zumindest teilweisen Daten zu extrahieren; und
Mittel, die ausgebildet sind, die zumindest teilweisen Daten zu speichern zum Weiterleiten an eine erste Zielvorrichtung (115), wobei die Netzwerkabschlusseinheit (111) ausgebildet ist, festzustellen, wie in getrennten Signalisierungsmeldungen erfasste Teildaten verbunden sind, und weiter ausgebildet ist, die Daten aus der Vielzahl von Signalisierungsmeldungen wiederherzustellen.

2. Netzwerkabschlusseinheit (111) gemäß Anspruch 1, wobei die zumindest teilweisen Daten wiederhergestellt werden, bevor sie an eine erste Zielvorrichtung weitergeleitet werden.

3. Netzwerkabschlusseinheit (111) gemäß Anspruch 1 oder Anspruch 2, die weiter Mittel aufweist, die betriebsfähig sind, zumindest teilweise Daten, die für die Zielvorrichtung (115) empfangen wurden, an weitere Zielvorrichtungen unter Verwendung von auf dem Signalisierungskanal übertragenen Meldungen zu senden.

4. Netzwerkabschlusseinheit (111) gemäß einem vorhergehenden Anspruch, wobei die Kommunikationsverbindung über ISDN-Einrichtungen (integrated services digital network - diensteintegrierendes Digitalnetz) vorgesehen ist.

5. Netzwerkabschlusseinheit (111) gemäß einem vorhergehenden Anspruch, wobei die zumindest teilweisen Daten ein Teil oder das Ganze von zumindest einer E-Mail-Meldung oder einer anderen Textmeldung sind.

6. Netzwerkabschlusseinheit (111) gemäß einem vorhergehenden Anspruch, wobei der vorgegebene Typ der zumindest teilweisen Daten einen Software-Download-Datentyp, Datenbank-Suchergebnisse, Nachrichteninformation oder einen Telemetrie-Datentyp aufweist.

7. Netzwerkabschlusseinheit (111) gemäß einem vorhergehenden Anspruch, die weiter Mittel aufweist, die betriebsfähig sind, zu erfassen, ob die Zielvorrichtung (115) aktiv ist, um die Daten empfangen zu können, und, wenn die Vorrichtung (115) aktiv ist, die von der Netzwerkabschlusseinheit (111) gespeicherten Daten an die Vorrichtung (115) zu übertragen.

8. Netzwerkabschlusseinheit (111) gemäß einem vorhergehenden Anspruch, die weiter Mittel aufweist, die betriebsfähig sind, Daten von der Zielvorrichtung (115) zu empfangen und die Daten in eine oder mehrere Signalisierungsmeldung(en) zur Übertragung der Daten an eine weitere Zielvorrichtung zu packen.

9. Netzwerkabschlusseinheit (111) gemäß einem vorhergehenden Anspruch, die weiter Mittel aufweist, die betriebsfähig sind, Signalisierungsmeldungen zu erfassen, die den Aufbau einer Verbindung zu einer vorgegebenen Zielvorrichtung (115) anzeigen, und als Reaktion auf eine derartige Erfassung, die von der Netzwerkabschlusseinheit (111) gespeicherten Daten an die vorgegebene Zielvorrichtung (115) zu übertragen.

10. Netzwerkabschlusseinheit (111) gemäß einem vorhergehenden Anspruch, die weiter aufweist:
Mittel, die betriebsfähig sind, die Aktivität des Signalisierungskanals zu überwachen und die Daten eines vorgegebenen Typs zu senden und/oder zu empfangen, wenn sich die Aktivität des Signalisierungskanals in einem vorgegebenen Bereich befindet.

11. Netzwerkabschlusseinheit (111) gemäß einem vorhergehenden Anspruch, die weiter aufweist:
Mittel, die betriebsfähig sind, die Daten eines vorgegebenen Typs während eines vorgegebenen Zeitintervalls zu senden und/oder zu empfangen.

12. Netzwerkabschlusseinheit (111) gemäß einem vorhergehenden Anspruch, die weiter Mittel aufweist,
die betriebsfähig sind, die Zeit zum Übertragen von Daten an ein Ziel über den Signalisierungskanal zu schätzen und, wenn die Zeit eine vorgegebene Schwelle überschreitet, die Daten unter Verwendung eines oder mehrerer der Datenkanäle an das Ziel zu übertragen.

13. Netzwerkabschlusseinheit (111) gemäß einem der Ansprüche 4 bis 11, die weiter aufweist:
Mittel, die betriebsfähig sind:
a) zuerst die Anzahl von Meldungen festzusetzen, die an eine Zielvorrichtung (115) zu übertragen sind, und die diese Anzahl repräsentierenden Daten zu übertragen;
b) zweitens den Sender jeder an die Zielvorrichtung (115) zu übertragenden Meldung zu identifizieren und Daten zu übertragen, die jeden Sender repräsentieren;
c) drittens Daten an die Zielvorrichtung (115) zu übertragen, die den Text jeder Meldung repräsentieren.

14. Verfahren zum Betreiben einer Netzwerkabschlusseinheit (111) zum Empfangen von digitalen Daten über eine Kommunikationsverbindung (109), die einen Signalisierungskanal und zumindest einen Datenkanal aufweist, wobei der Signalisierungskanal betriebsfähig ist, Verbindungen zwischen der Netzwerkabschlusseinheit (111) und einer oder mehreren Datenquelle(n) (103) über die Kommunikationsverbindung (109) aufzubauen und zu steuern, so dass Daten von der oder den Datenquelle(n) (103) an die Netzwerkabschlusseinheit (111) über zumindest einen Datenkanal übertragen werden können, wobei das Verfahren zum Betreiben der Netzwerkabschlusseinheit (111) **dadurch gekennzeichnet ist, dass** es die Schritte aufweist:
Erfassen von Meldungen, die auf dem Signalisierungskanal übertragen werden, die zumindest teilweisen Daten eines vorgegebenen Typs aufweisen, wobei die erfassten Meldungen ausreichend Information aufweisen, um der Netzwerkabschlusseinheit (111) zu ermöglichen, festzustellen, wie Teile von Daten desselben vorgegebenen Typs, die in getrennten Meldungen gesendet werden, verbunden sind, um der Netzwerkabschlusseinheit (111) eine Wiederherstellung der Daten zu ermöglichen; und
Extrahieren der zumindest teilweisen Daten;
Feststellen, wie in getrennten Signalisierungsmeldungen erfasste Teildaten verbunden sind;
Wiederherstellen der Daten aus der Vielzahl von Signalisierungsmeldungen;
Speichern der zumindest teilweisen Daten zum Weiterleiten an eine Zielvorrichtung (115).

15. Verfahren gemäß Anspruch 14, wobei der Schritt der Wiederherstellung von Daten vor dem Weiterleiten der Daten an eine Zielvorrichtung (115) stattfindet.

16. Verfahren gemäß Anspruch 14 oder 15, wobei die Kommunikationsverbindung eine ISDN-Kommunikationsverbindung aufweist und der Signalisierungskanal ein D-Kanal einer ISDN-Kommunikationsverbindung ist.

17. Verfahren gemäß einem der Ansprüche 14 bis 16, wobei die zumindest teilweisen Daten eines vorgegebenen Typs einen Teil oder das Ganze von zumindest einer E-Mail-Meldung oder einer anderen Textmeldung aufweisen, und wobei in dem Schritt der Wiederherstellung der digitalen Daten in eine vollständige Form das Ganze der zumindest einen oder mehreren E-Mail-Meldung(en) wiederhergestellt wird.

18. Verfahren einem der Ansprüche 14 bis 16, wobei die Daten eines vorgegebenen Typs einen Teil und ein Ganzes eines Software-Downloads, von Datenbank-Suchergebnissen, einer Nachrichteninformation oder von Telemetrie-Daten aufweisen, und wobei in dem Schritt der Wiederherstellung der digitalen Daten in eine vollständige Form das Ganze des Software-DownIoads, der Datenbank-Suchergebnisse, der Nachrichteninformation oder der Telemetrie-Daten wiederhergestellt wird.

19. Verfahren einem der Ansprüche 14 bis 18, das weiter den Schritt der Erfassung aufweist, ob die Zielvorrichtung (115) aktiv ist, um die wiederhergestellten Daten empfangen zu können, und wenn die Vorrichtung aktiv ist, die von der Netzwerkabschlusseinheit (111) gespeicherten Daten an die Vorrichtung (115) zu übertragen.

20. Verfahren einem der Ansprüche 14 bis 19, das weiter den Schritt des Empfangs von Daten von der Zielvorrichtung (115) und des Packens der Daten in eine oder mehrere Signalisierungsmeldung(en) zur Übertragung an eine weitere Zielvorrichtung aufweist.

21. Verfahren einem der Ansprüche 14 bis 20, das weiter den Schritt der Erfassung von Signalisierungsmeldungen aufweist, die den Aufbau einer Verbindung zu einer vorgegebenen Zielvorrichtung anzeigen; und als Reaktion auf eine derartige Erfassung, Übertragen der von der Netzwerkabschlusseinheit (111) gespeicherten Daten an die vorgegebene Zielvorrichtung.

22. Verfahren einem der Ansprüche 14 bis 21, das weiter den Schritt aufweist:
Überwachen der Aktivität des Signalisierungskanals; und
'Übertragen der Daten eines vorgegebenen Typs, wenn sich die Aktivität des Signalisierungskanals in einem vorgegebenen Bereich befindet.

23. , Verfahren einem der Ansprüche 14 bis 22, das weiter den Schritt des Übertragens der Daten eines vorgegebenen Typs während eines vorgegebenen Zeitintervalls aufweist.

24. Verfahren einem der Ansprüche 14 bis 23, das weiter den Schritt aufweist:
Schätzen der Zeit zum Übertragen der Daten über den Signalisierungskanal an ein Ziel; und, wenn die Zeit eine vorgegebene Schwelle überschreitet,
Übertragen der Daten an das Ziel unter Verwendung eines oder mehrer der Datenkanäle.

25. Verfahren einem der Ansprüche 16 bis 24, das weiter die Schritte aufweist:
a) zuerst Festsetzen der Anzahl von Meldungen, die an eine Zielvorrichtung zu übertragen sind, und Übertragen der diese Anzahl repräsentierenden Daten an die Netzwerkabschlusseinheit (111);
b) zweitens Identifizieren des Senders jeder an die Zielvorrichtung zu übertragenden Meldung und Übertragen der Daten, die jeden Sender repräsentieren, an die Netzwerkabschlusseinheit (111); und
c) drittens Übertragen der Daten, die den Text jeder Meldung repräsentieren, an die Netzwerkabschlusseinheit (111).

## Revendications

1. Unité terminale de réseau (111) destinée à recevoir des données numériques par l'intermédiaire d'une liaison de communication (109) comprenant un canal de signalisation et au moins un canal de données, ledit canal de signalisation pouvant être mis en oeuvre pour établir et commander des connexions entre ladite unité terminale de réseau (111) et une ou plusieurs sources de données (103) par l'intermédiaire de ladite liaison de communication (109) de sorte que des données peuvent être transférées de la ou chaque source de données (103) à l'unité terminale (111) par l'intermédiaire d'au moins un canal de données, l'unité terminale de réseau (111) étant **caractérisée en ce qu'**elle comprend :
un processeur (403) agencé pour détecter des messages transmis sur le canal de signalisation qui contiennent des données au moins partielles d'un type prédéterminé, les messages détectés comprenant des informations suffisantes pour permettre à l'unité terminale de réseau (111) d'établir la façon selon laquelle sont liées des parties de données du même type prédéterminé envoyées dans des messages séparés, pour permettre à l'unité terminale de réseau (111) de reconstituer les données,
un moyen agencé pour extraire les données au moins partielles, et
un moyen agencé pour mémoriser les données au moins partielles en vue d'une transmission à un premier dispositif destinataire (115),
l'unité terminale de réseau (111) étant agencée pour établir la façon selon laquelle sont liées les données partielles détectées dans des messages de signalisation séparés, et étant en outre agencée pour reconstituer les données à partir de ladite pluralité de messages de signalisation.

2. Unité terminale de réseau (111) selon la revendication 1, dans laquelle lesdites données au moins partielles sont reconstituées avant d'être transmises à un premier dispositif destinataire.

3. Unité terminale de réseau (111) selon la revendication 1 ou la revendication 2, comprenant en outre un moyen pouvant être mis en oeuvre pour envoyer les données au moins partielles reçues pour le dispositif destinataire (115) à d'autres dispositifs destinataire utilisant les messages transmis sur le canal de signalisation.

4. Unité terminale de réseau (111) selon l'une quelconque des revendications précédentes, dans laquelle la liaison de communication est fournie par l'intermédiaire d'un équipement de réseau numérique à intégration de services.

5. Unité terminale de réseau (111) selon l'une quelconque des revendications précédentes, dans laquelle lesdites données au moins partielles représentent une partie ou l'intégralité d'au moins un message de courrier électronique ou d'autres messages de texte.

6. Unité terminale de réseau (111) selon l'une quelconque des revendications précédentes, dans laquelle ledit type prédéterminé desdites données au moins partielles comprend un type de données de téléchargement de logiciel, des résultats de recherche dans une base de données, de nouvelles informations ou un type de données de télémétrie.

7. Unité terminale de réseau (111) selon l'une quelconque des revendications précédentes, comprenant en outre un moyen pouvant être mis en oeuvre pour détecter si le dispositif destinataire (115) est actif de façon à pouvoir recevoir les données et, si ledit dispositif (115) est actif, transmettre au dispositif (115) les données mémorisées par l'unité terminale de réseau (111).

8. Unité terminale de réseau (111) selon l'une quelconque des revendications précédentes, comprenant en outre un moyen pouvant être mis en oeuvre pour recevoir des données provenant du dispositif destinataire (115) et pour conditionner les données dans un ou plusieurs messages de signalisation afin de transmettre les données à un autre dispositif destinataire.

9. Unité terminale de réseau (111) selon l'une quelconque des revendications précédentes, comprenant en outre un moyen pouvant être mis en oeuvre pour détecter des messages de signalisation indiquant l'établissement d'une connexion à un dispositif terminal prédéterminé (115) et, en réponse à une telle détection, pour transmettre les données mémorisées par l'unité terminale de réseau (111) au dispositif destinataire prédéterminé (115).

10. Unité terminale de réseau (111) selon l'une quelconque des revendications précédentes, comprenant en outre .
un moyen pouvant être mis en oeuvre pour surveiller l'activité du canal de signalisation et pour envoyer et/ou recevoir les données d'un type prédéterminé lorsque l'activité du canal de signalisation se trouve à l'intérieur d'une plage prédéterminée.

11. Unité terminale de réseau (111) selon l'une quelconque des revendications précédentes, comprenant en outre :
un moyen pouvant être mis en oeuvre pour envoyer et/ou recevoir les données d'un type prédéterminé durant un intervalle de temps prédéterminé.

12. Unité terminale de réseau (111) selon l'une quelconque des revendications précédentes, comprenant en outre un moyen :
pouvant être mis en oeuvre pour estimer le temps de transmission des données vers une destination par l'intermédiaire du canal de signalisation, et, si le temps dépasse un seuil prédéterminé, pour transmettre les données vers la destination en utilisant un ou plusieurs des canaux de données.

13. Unité terminale de réseau (111) selon l'une quelconque des revendications 4 à 11, comprenant en outre :
un moyen pouvant être mis en oeuvre pour :
a) premièrement, établir le nombre de messages à transmettre à un dispositif destinataire (115) et transmettre des données représentant ledit nombre,
b) deuxièmement, identifier l'expéditeur de chaque message à transmettre au dispositif destinataire (115) et transmettre des données représentant chaque dit expéditeur,
c) troisièmement, transmettre des données représentant le texte de chaque message.au dispositif destinataire (115).

14. Procédé de mise en oeuvre d'une unité terminale de réseau (111) destinée à recevoir des données numériques par l'intermédiaire d'une liaison de communication (109) comprenant un canal de signalisation et au moins un canal de données, ledit canal de signalisation pouvant être mis en oeuvre pour établir et commander des connexions entre ladite unité terminale de réseau (111) et une ou plusieurs sources de données (103) par l'intermédiaire de ladite liaison de communication (109) de sorte que les données peuvent être transférées à partir de la ou chaque source de données (103) à l'unité terminale de réseau (111) par l'intermédiaire d'au moins un canal de données, le procédé de mise en oeuvre de l'unité terminale de réseau (111) étant **caractérisé en ce qu'**il comprend :
la détection de messages transmis sur le canal de signalisation qui contiennent des données au moins partielles d'un type prédéterminé, les messages détectés contenant en outre des informations suffisantes pour permettre à l'unité terminale de réseau (111) d'établir la façon selon laquelle sont liées les parties des données du même type prédéterminé envoyées dans des messages séparés, afin de permettre à l'unité terminale de réseau (111) de reconstituer les données, et
l'extraction des données au moins partielles,
l'établissement de la façon selon laquelle sont liées les données partielles détectées dans des messages de signalisation séparés,
la reconstitution des données à partir de ladite pluralité des messages de signalisation,
la mémorisation des données au moins partielles en vue d'une transmission à un dispositif destinataire (115).

15. Procédé selon la revendication 14, dans lequel ladite étape de reconstitution des données se produit avant la transmission des données à un dispositif destinataire (115).

16. Procédé selon soit la revendication 14 soit la revendication 15, dans lequel la liaison de communication comprend une liaison de communication de réseau numérique à intégration de services et ledit canal de signalisation est un canal D d'une liaison de communication de réseau numérique à intégration de services.

17. Procédé selon l'une quelconque des revendications 14 à 16, dans lequel les données au moins partielles d'un type prédéterminé comprennent une partie ou l'intégralité d'au moins un message de courrier électronique ou d'autres messages de texte et dans lequel, dans ladite étape de reconstitution desdites données numériques sous la forme d'un tout, l'intégralité dudit au moins un ou plusieurs messages de courrier électronique est reconstituée.

18. Procédé selon l'une quelconque des revendications 14 à 16, dans lequel les données d'un type prédéterminé comprennent une partie ou l'intégralité d'un téléchargement de logiciel, de résultats de recherche dans une base de données, de nouvelles informations ou de données de télémétrie, et dans lequel, dans ladite étape de reconstitution desdites données en une forme d'un tout, l'intégralité dudit téléchargement de logiciel, desdits résultats de recherche dans une base de données, desdites nouvelles informations ou desdites données de télémétrie est reconstituée.

19. Procédé selon l'une quelconque des revendications 14 à 18, comprenant en outre l'étape consistant à détecter si le dispositif destinataire (115) est actif de façon à pouvoir recevoir les données reconstituées et, si ledit dispositif est actif, à transmettre les données mémorisées par l'unité terminale de réseau (111) au dispositif (115).

20. Procédé selon l'une quelconque des revendications 14 à 19, comprenant en outre l'étape consistant à recevoir des données du dispositif destinataire (115) et le conditionnement des données en un ou plusieurs messages de signalisation en vue d'une transmission à un autre dispositif destinataire.

21. Procédé selon l'une quelconque des revendications 14 à 20, comprenant en outre l'étape consistant à détecter des messages de signalisation indiquant l'établissement d'une connexion à un dispositif destinataire prédéterminé et, en réponse à une telle détection,
le transfert des données mémorisées par l'unité terminale de réseau (111) au dispositif destinataire prédéterminé.

22. Procédé selon l'une quelconque des revendications 14 à 21, comprenant en outre l'étape consistant à :
surveiller l'activité du canal de signalisation, et
transférer les données d'un type prédéterminé lorsque l'activité du canal de signalisation se trouve à l'intérieur d'une plage prédéterminée.

23. Procédé selon l'une quelconque des revendications 14 à 22, comprenant en outre l'étape consistant à transférer les données d'un type prédéterminé durant un intervalle de temps prédéterminé.

24. , Procédé selon l'une quelconque des revendications 14 à 23, comprenant en outre les étapes consistant à :
estimer le temps pour transmettre les données à une destination par l'intermédiaire du canal de signalisation et, si le temps dépasse un seuil prédéterminé,
transférer les données à la destination en utilisant un ou plusieurs des canaux de données.

25. Procédé selon l'une quelconque des revendications 16 à 24, comprenant en outre, les étapes consistant à :
a) premièrement, établir le nombre de messages à transmettre à un dispositif destinataire et transférer des données représentant ledit nombre à l'unité terminale de réseau (111),
b) deuxièmement, identifier l'expéditeur de chaque message à transmettre au dispositif destinataire et transférer des données représentant chaque dit expéditeur à l'unité terminale de réseau (111) , et
c) troisièmement, transférer des données représentant le texte de chaque message à l'unité terminale de réseau (111).
